# EUROPÄISCHE PATENTSCHRIFT

(11) **EP 2 857 173 B1**
(45) Veröffentlichungstag und Bekanntmachung des Hinweises auf die Patenterteilung: **08.04.2020**
(21) Anmeldenummer: 14187753.0
(22) Anmeldetag: 06.10.2014
(51) Int. Cl.: B29C 49/12, B29C 49/58, B29C 49/06

(54) **Blasformmaschine mit Blaskolben mit schräg angeordneten Verbindungsleitungen**
Blow-moulding machine with blow pistons with angled interconnections
Machine de formage par soufflage dotée de piston de soufflage ayant des lignes de raccordement obliques

(30) Priorität: 04.10.2013 DE 102013111029
(43) Veröffentlichungstag der Anmeldung: 08.04.2015
(73) Patentinhaber: Krones AG, 93073 Neutraubling (DE)
(72) Erfinder: Handschuh, Eduard, 93073 Neutraubling (DE); Geltinger, Florian, 93073 Neutraubling (DE)
(74) Vertreter: Bittner, Bernhard

(56) Entgegenhaltungen:
- EP-A1- 2 253 451
- US-A1- 2012 141 621

## Beschreibung

Die vorliegende Erfindung bezieht sich auf eine Vorrichtung zum Umformen von Kunststoffvorformlingen zu Kunststoffbehältnissen gemäß dem Anspruch 1. Derartige Vorrichtungen sind aus dem Stand der Technik seit langem bekannt. Dabei werden üblicherweise erwärmte Kunststoffvorformlinge dieser Vorrichtung zugeführt und durch Beaufschlagung mit Druckluft zu Kunststoffbehältnissen bzw. Kunststoffflaschen expandiert. Zu diesem Zweck wird ein Blaskolben mit einer Blasdüse auf den Kunststoffvorformling aufgesetzt und beaufschlagt diesen mit Druckluft. Üblicherweise wird durch diesen Blaskolben bzw. die Blasdüse hindurch auch eine Reckstange in das Innere des Kunststoffvorformlings eingeführt, um diesen in seiner Längsrichtung zu dehnen.

Die Druckschrift EP 2 253 451 offenbart eine Vorrichtung gemäß dem Oberbegriff des Anspruchs 1. Dabei ist es bekannt, dass innerhalb dieses Blaskolbens Leitungen vorgesehen sind, welche das gasförmige Medium, beispielsweise ausgehend von einem Reservoir, zu der Blasdüse führen. Dabei verlaufen diese Leitungen üblicherweise abschnittswiese in einer senkrechten Richtung und abschnittsweise in einer waagerechten Richtung. Daher weisen diese Leitungen im Stand der Technik üblicherweise Knicke, beispielsweise 90°-Knicke, auf, welche für die Luftströmung hinderlich sein können. Weiterhin führt diese Anordnung zu einem erhöhten Totraum. Insbesondere bei sterilen Anordnungen können sich in den Bereichen dieser Knicke Keime bilden bzw. festsetzen. Unter einem Totraum wird im Folgenden derjenige insbesondere mit einem gas gefüllte Raum verstanden, der ausschließlich zum Leiten eines Mediums und insbesondere von Blasluft dient und der insbesondere an einem Ventilelement wie etwa einem Kolben endet. Das in dem Totraum befindliche Gas kann damit nicht vollständig zum Expandieren die Kunststoffvorformlinge verwendet werden, so dass man bestrebt ist, den Totraum möglichst zu verkleinern.

Die EP 2 253 451 offenbart eine Vorrichtung gemäß der Oberbegriffe der Ansprüche 1 und 9. Der vorliegenden Erfindung liegt daher die Aufgabe zugrunde, die Beaufschlagung der Kunststoffvorformlinge während ihres Expansionsvorgangs mit einem gasförmigen Medium und beispielsweise mit Blasluft zu verbessern. Diese Aufgaben werden erfindungsgemäß durch den Gegenstand des unabhängigen Anspruchs erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen gemäß Anspruch 1 weist eine an einem sich in einer vorgegebenen Längsrichtung erstreckenden Blaskolben angeordnete Blasdüse auf, um diese Kunststoffvorformlinge zu deren Expansion mit einem gasförmigen Medium zu beaufschlagen. Weiterhin weist die Vorrichtung eine Anschlusseinrichtung auf, um der Blasdüse das gasförmige Medium zuzuführen. Daneben weist die Vorrichtung eine Verbindungsleitung auf, um das gasförmige Medium von der Anschlusseinrichtung zu der Blasdüse zu führen.

Erfindungsgemäß verläuft wenigstens ein Abschnitt dieser Verbindungsleitung schräg gegenüber der besagten Längsrichtung.

Vorteilhaft weist die Vorrichtung eine Antriebseinrichtung auf, um die Blasdüse zum Zwecke der Expansion auf den Kunststoffvorformling zuzustellen.

Während, wie oben erwähnt, im Stand der Technik üblicherweise vertikal und horizontal verlaufende Verbindungsleitungen vorgesehen sind, wird hier vorgeschlagen, eine schräge Verbindungsleitung vorzusehen. Durch das Vorsehen dieser Verbindungsleitung können allzu starke Knicke, beispielsweise 90°-Knicke, verhindert werden und auf diese Weise die Luftführung vereinfacht werden. Vorteilhaft ist die besagte Verbindungsleitung ohne Knicke ausgeführt. Mit anderen Worten ist es bei mathematischer Betrachtung denkbar, dass an jeden Punkt der Verbindungsleitung eine genau definierte Tangente angelegt werden kann. Es wäre jedoch auch denkbar, dass Knicke vorgesehen sind, diese jedoch ein bestimmtes Winkelmaß nicht übersteigen, beispielsweise die Knicke um nicht mehr als 60°, bevorzugt um nicht mehr als 40°, bevorzugt um nicht mehr als 30° abknicken. Auf diese Weise kann, wie oben erwähnt, die Zuführung der Blasluft verbessert werden.

Bei einer weiteren vorteilhaften Ausführungsform vergrößert sich ein Abstand zwischen der Verbindungsleitung und einer geometrischen Längsachse des Blaskolbens in einer Richtung der Längsachse, welche von dem zu expandierenden Kunststoffvorformling wegführt.

Bei einer weiteren vorteilhaften Ausführungsform weist die Vorrichtung eine Ventileinrichtung zum Versorgen der Blasdüse mit dem gasförmigen Medium auf. Vorteilhaft weist die Vorrichtung einen Ventilblock auf, der mehrere Ventile aufweist. Auf diese Weise kann der Kunststoffvorformling mit mehreren Druckniveaus während seiner Expansion versorgt werden, beispielsweise einem Vorblasdruck (zwischen 6-10 bar), einem Zwischenblasdruck (zwischen 10 und 20 bar) und einem Fertigblasdruck (zwischen 25 und 40 bar). Sämtliche Druckniveaus können dabei über die besagte Verbindungsleitung zugeführt werden.

Bei der Anschlusseinrichtung kann es sich um jegliche Einrichtung handeln, welche die Zuführung eines insbesondere gasförmigen Mediums und insbesondere der Blasluft - etwa ausgehend von einem Reservoir - an die Blasdüse ermöglicht. Auch eine (weitere) Verbindungsleitung, welche eine Strömungsverbindung zu der besagten Verbindungsleitung herstellt, kann daher als Anschlusseinrichtung aufgefasst werden.

Bei einer weiteren vorteilhaften Ausführungsform weist die Vorrichtung eine Blasform auf, welche wiederum einen Hohlraum ausbildet, innerhalb dessen der Kunststoffvorformling zu dem Kunststoffbehältnis expandierbar ist bzw. expandiert wird. Diese Blasform weist dabei bevorzugt mehrere Blasformteile, beispielsweise zwei Seitenteile, auf, die wiederum an Blasformhaltern angeordnet sind. Diese Blasformhalter können zum Öffnen und Schließen der Blasform bevorzugt auseinander- und zusammengeschwenkt werden. Vorteilhaft sind daher Antriebseinrichtungen vorgesehen, um diese Schwenkbewegungen zu bewirken.

Bei einer weiteren vorteilhaften Ausführungsform weist die Vorrichtung einen Sterilraum auf, innerhalb dessen die Kunststoffvorformlinge zu den Kunststoffbehältnissen expandiert werden. Dieser Sterilraum ist dabei bevorzugt gegenüber einer unsterilen Umgebung abgedichtet. Die erfindungsgemäße Vorrichtung eignet sich insbesondere für derartige Anwendungen mit Sterilraum, da durch die schräge Führung der Verbindungsleitung, wie oben erwähnt, Knicke verhindert bzw. die Winkel dieser Knicke verringert werden können und daher auch die Gefahr verringert werden kann, dass sich Keime in diesen Knicken absetzen.

Bei einer weiteren vorteilhaften Ausführungsform ist der Blaskolben aus einem Material gefertigt, welches aus einer Gruppe von Materialien ausgewählt ist, welche Stahl, Niro, beschichtetes Aluminium und dergleichen enthält. Insbesondere für sterile Anwendungen kann jedoch auch der Blaskolben oder Bestandteile des Blaskolbens aus Kunststoffen wie PEEK, PTFE oder Verbindungen aus diesen Kunststoffen aufgebaut sein.

Bei einer weiteren vorteilhaften Ausführungsform erstreckt sich der oben genannte Abschnitt der Verbindungsleitung unter einem Winkel gegenüber der Längsrichtung, der zwischen 5° und 70° liegt, bevorzugt zwischen 5° und 50°, bevorzugt zwischen 5° und 40° und besonders bevorzugt zwischen 5° und 30°. Mittels dieser Winkeldimensionen kann ein günstiges Längenmaß für den Blaskolben bzw. den Abschnitt des Blaskolbens, in dem sich die Verbindungsleitung befindet, geschaffen werden. Vorzugsweise wird dieser Winkel auch gegenüber einer unten noch genauer beschriebenen Reckstange ausgebildet.

Bei einer weiteren vorteilhaften Ausführungsform verläuft der Abschnitt geradlinig oder gegebenenfalls mit einer leichten Krümmung. Der geradlinige Verlauf hat den Vorteil, dass die Verbindungsleitung im Rahmen der Herstellung leichter, beispielsweise durch Bohren, hergestellt werden kann.

Die Vorrichtung weist einen in die Kunststoffvorformlinge einführbaren stangenartigen Körper auf, der durch wenigstens einen Abschnitt des Blaskolbens und/oder der Blasdüse hindurchgeführt ist. Die Blasluft wird damit
zum Expandieren der Kunststoffvorformlinge zwischen der Reckstange und der Mündungen der Kunststoffvorformlinge in diese eingeführt.

Bei einer weiteren vorteilhaften Ausführungsform weist die Vorrichtung eine Vielzahl der oben genannten Verbindungsleitungen auf, welche das gasförmige Medium von der Anschlusseinrichtung zu der Blasdüse führen. Vorteilhaft verlaufen dabei mehrere dieser Verbindungsleitungen, bevorzugt alle Verbindungsleitungen, schräg zu der genannten Längsrichtung. Vorteilhaft verlaufen dabei diese Verbindungsleitungen gleichmäßig schräg. Bei gesamter Betrachtung bilden damit diese Verbindungsleitungen eine kegelförmige Gestalt aus, die sich bevorzugt in der Richtung weg von dem Kunststoffvorformling erweitert. Mit anderen Worten nähern sich diese Verbindungsleitungen in der Längsrichtung auf den Kunststoffvorformling zu der Reckstange an. Diese Reckstange verläuft damit bevorzugt innerhalb der einzelnen Verbindungsleitungen. Dabei ist es möglich, dass diese Vielzahl von Verbindungsleitungen sternförmig angeordnet ist.

Die besagten Verbindungsleitungen sind in einer Umfangsrichtung um eine Längsachse des Blaskolbens angeordnet bzw. in einer Umfangsrichtung um den besagten stangenartigen Körper. Vorteilhaft erstrecken sich dabei, wie gesagt, diese Verbindungsleitungen knickfrei. Insbesondere ist daran gedacht, die Verbindungsleitungen in regelmäßigen Abständen um den Umfang des Blaskolbens anzuordnen. Bevorzugt sind weniger als 15, besonders bevorzugt weniger als 12 Verbindungsleitungen am Blaskolben vorgesehen.

Bevorzugt sind die Verbindungsleitungen sternförmig um die Reckstange angeordnet. Diese Verbindungsleitungen können dabei in dem Ventilblock angebrachte Bohrungen sein.

Ein Sammelraum ist
vorgesehen, von dem aus die einzelnen Verbindungsleitungen mit dem gasförmigen Medium versorgt werden können. Dieser Sammelraum kann dabei bevorzugt als Ringleitung bzw. allgemeiner als umlaufende Leitung ausgestaltet sein, von der die einzelnen Verbindungsleitungen abzweigen. Die Anschlusseinrichtung kann dabei wiederum der umlaufenden Leitung ein gasförmiges Medium zuführen. Es wäre auch denkbar, dass mehrere Anschlusseinrichtungen vorgesehen sind, welche dem Sammelraum beispielsweise Druckluft unter unterschiedlichen Druckniveaus zuführen können.

Der besagte Ringraum kann dabei Teil einer Anschlusseinrichtung sein. Die Anschlusseinrichtung kann beispielsweise derart ausgeführt sein, dass über diese Anschlusseinrichtung der Ringraum beispielsweise von einer Ventilzuleitung mit dem gasförmigen Medium versorgt wird.

Vorteilhaft sind dabei diese Verbindungsleitungen derart ausgeführt, dass sie (mit Ausnahme des Blaskolbens selbst) keine weiteren Bauteile kreuzen, um auch auf diese Weise zu verhindern, dass Bereiche entstehen, in denen sich leichter Keime ansetzen können. Vorteilhaft verlaufen daher die Verbindungsleitungen ausschließlich innerhalb des Blaskolbens.

Dieser Blaskolben kann einteilig ausgebildet sein. Bevorzugt ist jedoch der Blaskolben mehrteilig und insbesondere zweiteilig ausgebildet. Diese beiden Teile werden bevorzugt bei der

Herstellung gemeinsam gebohrt. Bevorzugt ist ein erstes Teil des Blaskolbens in ein zweites Teil des Blaskolbens einsteckbar. Bevorzugt weist damit ein Teil des Blaskolbens einen Aufnahmebereich zum Aufnehmen eines Abschnitts des anderen Teils des Blaskolbens auf.

Bei einer weiteren vorteilhaften Ausführungsform weisen diese Verbindungsleitungen jeweils Einlassöffnungen auf, und es ist, wie oben gesagt, bevorzugt ein Ringraum vorgesehen, der diese Einlassöffnungen bevorzugt gemeinsam mit dem gasförmigen Medium versorgt. Diese Einlassöffnungen können dabei bevorzugt beispielsweise einen elliptischen Querschnitt aufweisen.

Bei einer weiteren vorteilhaften Ausführungsform weist die Vorrichtung wenigstens ein Ventil bzw. wenigstens eine Ventileinrichtung auf, um die Zufuhr des gasförmigen Mediums über die Verbindungsleitungen zu steuern. Vorteilhaft ist, wie oben erwähnt, eine Vielzahl derartiger Ventileinrichtungen vorgesehen. Dabei kann auch ein Ventil vorgesehen sein, welches eine Abfuhr eines gasförmigen Mediums aus dem Kunststoffvorformling ermöglicht, beispielsweise nach dessen vollständiger Expansion.

Das Vorsehen dieser Vielzahl von Ventilen erlaubt die Zufuhr von Blasluft mit unterschiedlichen Drücken, beispielsweise einem Vorblasdruck, einem Zwischenblasdruck und einem Fertigblasdruck. Auch kann ein Ventil zum Entlassen des gasförmigen Mediums aus den Kunststoffvorformlingen bzw. insbesondere den hieraus geblasenen Kunststoffbehältnissen vorgesehen sein. So kann ein erstes Ventil die Zuführung eines Vorblasdrucks steuern, ein zweites Ventil die Zufuhr eines Zwischenblasdrucks und ein drittes Ventil die Zufuhr eines Fertigblasdrucks.

Bei einer weiteren vorteilhaften Ausführungsform ist das Ventil (insb. über eine Zuleitung) mit den Verbindungsleitungen in Strömungsverbindung bringbar, wobei eine Querschnittsfläche dieser Verbindungsleitungen wenigstens so groß ist, wie eine Querschnittsfläche der Zuleitung. Zusätzlich oder alternativ wäre es auch möglich, dass eine (äquivalente) Querschnittsfläche der Verbindungsleitungen größer oder gleich der Querschnittsfläche eines Entlüftungsventils ist. Bei einer weiteren vorteilhaften Ausführungsform wäre es auch denkbar, dass eine Querschnittsfläche (und/oder ein Durchmesser) wenigstens einer Verbindungsleitung, bevorzugt mehrerer Verbindungsleitungen und besonders bevorzugt aller dieser Verbindungsleitungen größer ist als eine Querschnittsfläche (und/oder ein Durchmesser) einer Zuleitung oder einer Entlastungsleitung. Vorzugsweise ist eine Querschnittsfläche (und/oder ein Durchmesser) einer Entlastungsleitung, welche zum Abführen der Blasluft aus dem Kunststoffbehältnis dient, größer als der Querschnitt (und/oder Durchmesser) einer Zuleitung, welche dem Kunststoffvorformling die Blasluft zuführt.

Weiterhin wäre es auch möglich, dass sich alle Bohrungen bzw. Verbindungsleitungen vom Eintritt in den Blaskolben auf dem Verlauf zum Dichtelement radial der Recksange annähern. Dabei kann es vorgesehen sein, dass an einem Ausgang des Ventils diese besagte Zuführleitung angeordnet ist und sich beispielsweise in einer anderen Richtung erstreckt, als die Verbindungsleitung selbst. Vorteilhaft ist jedoch ein Querschnitt dieser Zuleitung kleiner oder gleich groß wie der Querschnitt der Verbindungsleitung. Hierdurch wird gewährleistet, dass durch die Verbindungsleitung bzw. durch diesen Querschnitt selbst die Zuführung der Luft an die Kunststoffvorformlinge nicht behindert oder gedrosselt wird.

Zwischen dem stangenartigen Körper und dem Blaskolben ist ein Führungskörper angeordnet. Dieser Führungskörper dient dabei zum Führen einer Relativbewegung zwischen dem stangenartigen Körper und dem Blaskolben. Insbesondere handelt es sich bei diesem Führungskörper um eine Führungshülse. Diese Führungshülse ist dabei bevorzugt aus einem Kunststoff hergestellt.

Die vorliegende Erfindung ist weiterhin auf einen Blaskolben zur Beaufschlagung von Kunststoffvorformlingen mit einem gasförmigen Medium gerichtet. Dieser Blaskolben weist einen Grundkörper auf, der in seinem Inneren einen durchgehenden und sich in einer Längsrichtung des Blaskolbens erstreckenden Hohlraum aufweist, durch welchen ein stangenartiger Körper und insbesondere eine Reckstange führbar ist, sowie eine Vielzahl von Verbindungsleitungen, welche zum Leiten eines gasförmigen Mediums geeignet sind. Erfindungsgemäß ist jede dieser Verbindungsleitungen in einer Umfangsrichtung um diesen Hohlraum angeordnet und verläuft schräg gegenüber der Längsrichtung.

Bei einer weiteren bevorzugten Ausführungsform weist der Blaskolben eine Verbindungeinrichtung auf, um an dem Blaskolben fest jedoch lösbar eine Blasdüse anzuordnen. Bei einer bevorzugten Ausführungsform mündet wenigstens eine Verbindungsleitung und münden bevorzugt alle Verbindungsleitungen in den Hohlraum. Bevorzugt münden die Verbindungsleitungen über eine ellipsenförmige, langlochartige oder nierenförmige Öffnung in den Hohlraum. Bevorzugt sind die Verbindungsleitungen gleichmäßig um den Hohlraum herum angeordnet. Bevorzugt weist der Hohlraum in wenigstens einem Bereich einen größeren Querschnitt auf als in einem anderen Bereich. Mit anderen Worten ändert sich ein Querschnitt dieses Hohlraums wenigstens einmal entlang der Längsrichtung.

Bevorzugt weist der Hohlraum in demjenigen Bereich, in dem die Verbindungsleitungen in ihn münden, einen vergrößerten Querschnitt auf. Auf diese Weise kann die Zufuhr der Blasluft an der Reckstange vorbei in die Mündung der Kunststoffvorformlinge erleichtert werden. Durch diesen vergrößerten Bereich des Hohlraums kann ebenfalls ein insbesondere ringförmiger Sammelraum für die Blasluft gebildet werden, der die Reckstange umgibt. Über diesen Sammelraum kann das gasförmige Medium an die Kunststoffvorformlinge zu deren Expansion weiter geleitet werden.

Bei einer weiteren bevorzugten Ausführungsform weist wenigstens eine dieser Verbindungsleitungen eine Einlassöffnung auf, welche sich zumindest teilweise in einer Ebene erstreckt, welche tangential zu dem Grundkörper verläuft.

Bevorzugt erstreckt sich wenigstens eine Einlassöffnung wenigstens einer Verbindungsleitung auch in einer Ebene, zu welcher die Längsrichtung senkrecht steht. Bevorzugt erstreckt sich wenigstens eine Einlassöffnung in zwei zueinander senkrechten Ebenen.

Bei einer weiteren bevorzugten Ausführungsform weist der Grundkörper einen ersten Abschnitt mit einem ersten Außenquerschnitt auf, sowie einen zweiten Abschnitt mit einem zweiten von dem ersten Außenquerschnitt abweichenden Außenquerschnitt, wobei sich diese Abschnitte aneinander in einem Übergangsbereich aneinander anschließen. Bevorzugt ist wenigstens eine Einlassöffnung in diesem Übergangsbereich angeordnet.

Bevorzugt weist wenigstens einer dieser Abschnitte einen kreisförmigen Außenquerschnitt auf und bevorzugt weisen beide Abschnitte jeweils einen kreisförmigen Außenquerschnitt auf. Bevorzugt sind die Verbindungsleitungen in dem Abschnitt mit dem größeren Außenquerschnitt angeordnet. Bevorzugt ist der Abschnitt mit dem größeren Außenquerschnitt näher an einer an dem Blaskolben anzuordnenden Blasdüse angeordnet. Bei einer weiteren bevorzugten Ausführungsform gehen der erste Abschnitt und der zweite Abschnitt stufenartig ineinander über. Bevorzugt ist an dem Abschnitt mit dem größeren Querschnitt ein dritter Abschnitt des Grundkörpers angeordnet, wobei dieser dritte Abschnitt auch die Verbindungseinrichtung zum Anordnen der Blasdüse aufweist.

Bei einer weiteren bevorzugten Ausführungsform verlaufen die Verbindungsleitungen geradlinig innerhalb des Grundkörpers. Vorteilhaft weisen die Verbindungsleitungen Auslassöffnungen an einem ihrer Enden auf. Vorteilhaft handelt es sich bei den Verbindungsleitungen um Bohrungen. Es wäre jedoch auch denkbar, die Verbindungsleitungen (wenigstens abschnittsweise oder vollständig) gekrümmt auszugestalten.

Weitere Vorteile und Ausführungsformen ergeben sich aus den beigefügten Zeichnungen. Darin zeigen:
- Fig. 1: Eine schematische Darstellung einer erfindungsgemäßen Anordnung zum Umformen von Kunststoffvorformlingen zu Kunststoffbehältnissen;
- Fig. 2: eine Darstellung einer erfindungsgemäßen Umformungsstation;
- Fig. 3: eine Darstellung eines Blaskolbens nach dem Stand der Technik;
- Fig. 4: eine Teildarstellung eines erfindungsgemäßen Blaskolbens; und
- Fig. 5: eine weitere Darstellung eines erfindungsgemäßen Blaskolbens.

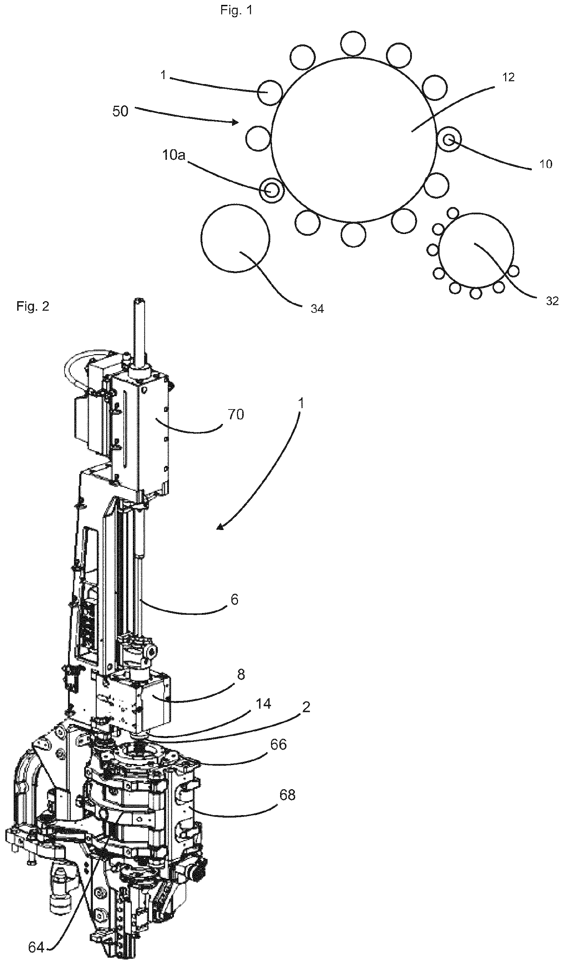

Fig. 1 zeigt eine schematische Darstellung einer Anordnung 50 zum Umformen von Kunststoffvorformlingen 10 zu Kunststoffbehältnissen 10a. Dabei werden über eine Zuführeinrichtung 32, wie beispielsweise einen Zuführstern, die Kunststoffvorformlinge 10 einer Vielzahl von Umformungsstationen 1 zugeführt. Diese Umformungsstationen 1 sind dabei an einem drehbaren Träger angeordnet. Während ihres Transports entlang des Transportpfades P werden die Kunststoffvorformlinge 10 zu den Kunststoffbehältnissen 10a expandiert. Die so expandierten Kunststoffbehältnisse werden über eine Abführeinrichtung 34 wieder von dem Transportstern 12 abgenommen und weiter transportiert. Bei der Zuführeinrichtung und/oder der Abführeinrichtung kann es sich jeweils um Transportsterne handeln.

Fig. 2 zeigt eine Darstellung einer einzelnen Umformungsstation 1. Diese Umformungsstation 1 weist dabei eine Blasformeinrichtung auf, bei der hier zwei Seitenteile 64 und 66 gezeigt sind, die um eine Achse gegeneinander geschwenkt werden können, welche senkrecht zu dem Transportpfad der Kunststoffbehältnisse ist. Durch diesen Vorgang können Kunststoffvorformlinge in diese Blasformanordnung eingebracht werden und mittels Blasluft expandiert werden. Das Bezugszeichen 68 kennzeichnet eine Verriegelungseinrichtung zum Verriegeln der beiden Blasformteile miteinander.

Für die Expansion wird eine Blasdüse 2 auf die Kunststoffvorformlinge oder einen Teil der Blasform aufgesetzt, um diese so mit Druckluft beaufschlagen zu können. Diese Blasdüse 2 ist dabei an einen nur teilweise dargestellten Blaskolben 14 angeordnet. Das Bezugszeichen 8 kennzeichnet einen Ventilblock, in dem eine Vielzahl von Ventilen angeordnet ist, um die Beaufschlagung der Kunststoffvorformlinge mit unterschiedlichen Druckniveaus zu steuern. Im Produktionsbetrieb bewegt sich der Ventilblock im Gegensatz zum Blaskolben und der Blasdüse bevorzugt nicht. Grundsätzlich wäre es jedoch denkbar, dass sich der Ventilblock mit oben genannten bzw. weiteren Bauteilen mitbewegt.

Das Bezugszeichen 6 kennzeichnet eine Reckstange, die in das Innere der Kunststoffvorformlinge einführbar ist, um diese während ihrer Expansion in ihrer Längsrichtung zu dehnen. Das Bezugszeichen 70 kennzeichnet einen entsprechenden Antrieb, wie einen Linearmotor, der die Bewegung der Reckstange in dieser Längsrichtung L steuert. Weiterhin ist es auch möglich, dass der Blaskolben 14 ebenfalls in dieser Längsrichtung L bewegt wird, was beispielsweise mittels Führungskurven erfolgen kann.

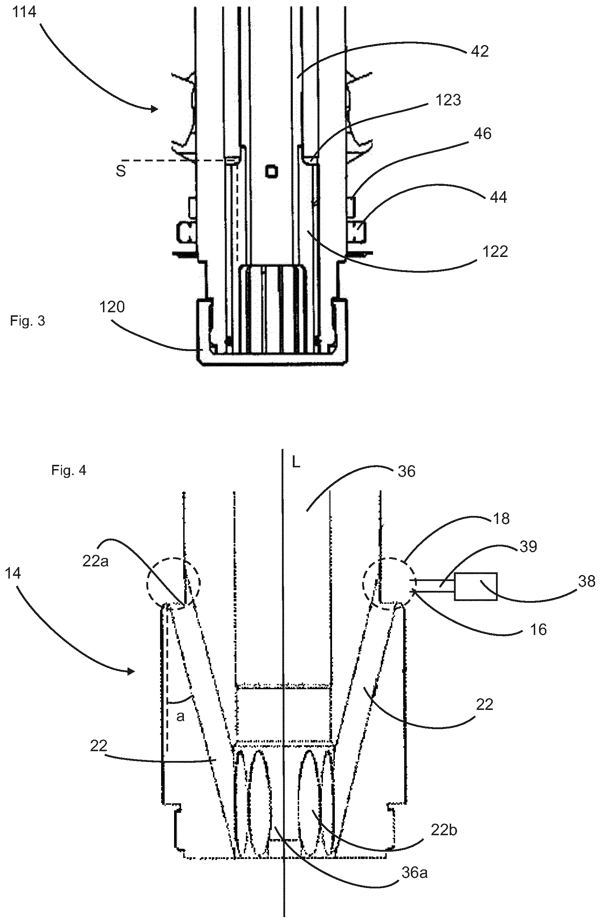

Fig. 3 zeigt eine Darstellung eines Blaskolbens 114 nach dem Stand der Technik. Eine Blasdüse ist hier nicht angeordnet, sondern anstelle dessen eine Kappe 120, welche als Blasdüsenersatz bei der Lieferung vorgesehen ist. Im Inneren des Blaskolbens ist eine Verbindungsleitung 122 zu erkennen, welche sich in vertikaler Richtung bzw. in der Längsrichtung L erstreckt. Ein zweiter Abschnitt 123 erstreckt sich in waagerechter Richtung. Das Bezugszeichen S kennzeichnet den Strömungsweg der Blasluft. Wie oben erwähnt, kann es in diesem Fall zu Knicken innerhalb der Verbindungsleitung kommen.

Weiterhin weist jedoch dieser Blaskolben 114 auch eine Führungshülse 42 auf, welche zum Führen der Reckstange 6 dient. Es wird darauf hingewiesen, dass diese Führungshülse auch bei der erfindungsgemäßen Blaskolbenanordnung vorteilhaft ist. Vorteilhaft ist diese Führungshülse aus einem Kunststoff hergestellt und ist in dem Blaskolben eingesetzt. Die Reckstange 6, die bevorzugt aus Stahl besteht, kann damit so geführt werden, dass der Blaskolben 114 und die Reckstange 6 nicht aneinander anliegen.

Das Bezugszeichen 44 kennzeichnet eine Dichtung und das Bezugszeichen 46 eine weitere Führungseinrichtung. Auf diese Weise kann der Blaskolben 114 (und entsprechend auch der erfindungsgemäße Blaskolben) innerhalb des oben gezeigten Ventilblocks 8 geführt und auch bewegt werden.

Fig. 4 zeigt eine Darstellung eines erfindungsgemäßen Blaskolbens 14. Man erkennt hier, dass die Verbindungsleitungen 22 nicht senkrecht bzw. in der Richtung L verlaufen, sondern schräg hierzu. Der Winkel a, unter dem diese Verbindungsleitungen laufen, kann, wie oben erwähnt, bevorzugt zwischen 5° und 50° bezüglich der Längsrichtung L liegen. Man erkennt, dass hier eine Vielzahl von Verbindungsleitungen 22 umlaufend um die Längsrichtung L angeordnet sind. Diese Verbindungsleitungen weisen eine obere Zuführöffnung 22a auf sowie eine untere Öffnung bzw. Abführöffnung 22b, die hier elliptisch ausgeführt ist und in einen Sammelabschnitt 25 des Blaskolbens 14 mündet.

Gestrichelt bzw. schematisch dargestellt ist hier ein Ringkanal bzw. Ringraum 18, der die einzelnen Verbindungsleitungen 22 mit dem gasförmigen Medium versorgt. Dieser Ringkanal bzw. Ringraum 18 kann wiederum eine oder bevorzugt mehrere Anschlusseinrichtungen 16 aufweisen. Um den Totraum möglichst gering zu halten, ist es weiterhin vorteilhaft, den Ringkanal bzw. auch die Ventile so nahe wie möglich an der Blasdüse bzw. dem Kunststoffbehältnis anzuordnen. Das Bezugszeichen 36 kennzeichnet einen Hohlraum, der zur Aufnahme der Reckstange dient. Auch die Öffnungen 22b der Verbindungsleitungen 22 münden in diesen Hohlraum. Das Bezugszeichen 38 kennzeichnet eine Ventileinrichtung, welche die Zufuhr des gasförmigen Mediums an den Ringraum 18 und damit auch an die Blasdüse steuert. Das Bezugszeichen 39 kennzeichnet eine Verbindungsleitung, die sich von der Ventileinrichtung 38 zu dem Ringraum 18 erstreckt.

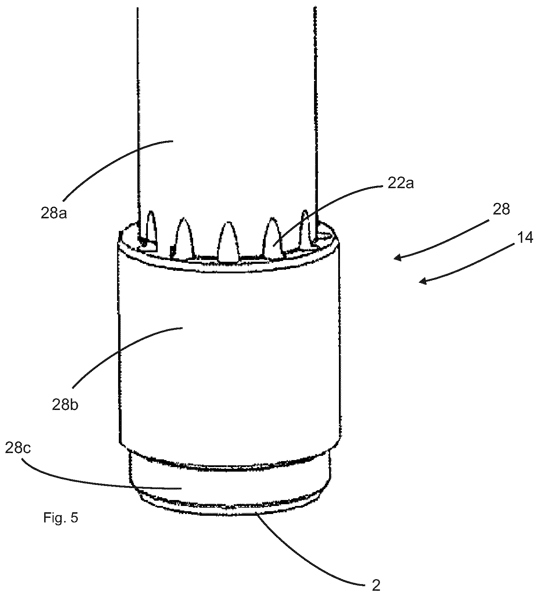

Fig. 5 zeigt eine weitere Darstellung eines Blaskolbens 14. Man erkennt hier wiederum einen Grundkörper 28 dieses Blaskolbens, innerhalb dessen die oben erwähnten schrägen Verbindungsleitungen 22 verlaufen. Auch ist hier wiederum die Blasdüse 2 dargestellt, welche auf den Kunststoffvorformling aufgesetzt werden kann. Die Luftkanäle 22 sind, wie oben erwähnt, hier bevorzugt sternförmig (um den Blaskolben herum) angeordnet.

Mit anderen Worten sind die Verbindungswege für das Fluid zwischen dem bevorzugt feststehenden Ventilblock und dem bevorzugten bewegten Dichtelement (d.h. der Blasdüse) bevorzugt sternförmig um die Reckstange angeordnet.

Weiterhin ist es möglich, dass in den Raum innerhalb des Blaskolbens 14 (vgl. Fig. 4) eine (nicht dargestellte) Führungshülse eingesetzt wird. Durch die hier gezeigte schräge Anordnung der Verbindungsleitungen 22 können Knicke in der Verbindungsleitung vermieden werden.

Man erkennt, dass der Grundkörper des Blaskolbens hier drei sich aneinander anschließende Abschnitte 28a, 28b und 28c mit unterschiedlichen Querschnitten aufweist. Insbesondere weist der mittlere Abschnitt 28b einen größeren Querschnitt auf, als die beiden sich jeweils an diesen mittleren Abschnitt anschließenden Abschnitte 28a und 28c. Die Verbindungsleitungen 22 verlaufen größtenteils in dem Abschnitt 28b mit dem vergrößerten Querschnitt, jedoch abschnittsweise auch in dem Abschnitt 28c. Man erkennt weiterhin, dass die Öffnungen 22a der Verbindungsleitungen in einem Übergangsbereich zwischen dem ersten Abschnitt 28a und dem zweiten Abschnitt 28b liegen. Auch diese Öffnungen weisen dabei zumindest teilweise ein elliptisches, langlochartiges oder nierenförmiges Profil auf. Auch erkennt man, dass die Öffnungsquerschnitte der Öffnungen in zwei zueinander abgewinkelten und hier insbesondere senkrechten Ebenen verlaufen.

Das Bezugszeichen 36a (Figur 4) kennzeichnet einen Abschnitt des Hohlraums 36 mit vergrößertem Querschnitt. In diesen Abschnitt 36a münden die einzelnen Verbindungsleitungen. In diesem Abschnitt 36a wird damit ein weiterer Sammelraum für das gasförmige Medium ausgebildet, der jedoch in der Strömungsrichtung des zur Expansion des Kunststoffvorformlings verwendeten gasförmigen Mediums stromabwärts der Verbindungsleitungen 22 liegt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsstationen
- 2: Blasdüse
- 6: Reckstange
- 8: Ventilblock
- 10: Kunststoffvorformling
- 10a: Kunststoffbehältnisse
- 12: Transportstern
- 14: Blaskolben
- 18: Ringkanal bzw. Ringraum
- 22: Verbindungsleitungen/Luftkanäle
- 22a: Zuführöffnung
- 22b: untere Öffnung
- 25: Sammelabschnitt
- 28: Grundkörper
- 28a, b, c: Abschnitt des Grundkörpers
- 32: Zuführeinrichtung
- 34: Abführeinrichtung
- 36: Hohlraum
- 36a: Abschnitt des Hohlraums
- 38: Ventileinrichtung
- 42: Führungshülse
- 44: Dichtung
- 46: weitere Führungseinrichtung
- 50: Anordnung
- 64, 66: Seitenteile
- 68: Verriegelungseinrichtung
- 70: Antrieb
- 114: Blaskolben
- 120: Kappe
- 122: Verbindungsleitung
- 123: zweiter Abschnitt
- P: Transportpfad
- L: Längsrichtung
- S: Strömungsweg
- a: Winkel

## Patentansprüche

1. Vorrichtung (1) zum Umformen von Kunststoffvorformlingen (10) zu Kunststoffbehältnissen mit einer an einem sich in einer vorgegebenen Längsrichtung (L) erstreckenden Blaskolben (14) angeordneten Blasdüse (2) um diese Kunststoffvorformlinge zu deren Expansion mit einem gasförmigen Medium zu beaufschlagen, mit einer Anschlusseinrichtung, um der Blasdüse (2) das gasförmige Medium zuzuführen und mit wenigstens einer Verbindungsleitung (22), welche das gasförmige Medium von der Anschlusseinrichtung zu der Blasdüse führt,
wobei wenigstens ein Abschnitt dieser Verbindungsleitung (22) schräg gegenüber der Längsrichtung verläuft,
wobeidie Verbindungsleitungen (22) jeweils Einlassöffnungen (22a) aufweisen, und ein Ringraum (18) vorgesehen ist, der diese Einlassöffnungen (22a) gemeinsam mit dem gasförmigen Medium versorgt wobei die Vorrichtung einen in die Kunststoffvorformlinge einführbaren stangenartigen Körper (6) aufweist, der durch wenigstens einen Abschnitt der Blasdüse und/ oder des Blaskolbens (14) hindurchführbar ist, **dadurch gekennzeichnet, dass** zwischen dem stangenartigen Körper und dem Blaskolben (14) ein Führungskörper angeordnet ist.

2. Vorrichtung (1) nach Anspruch 1,
**dadurch gekennzeichnet, dass**
der Abschnitt dieser Verbindungsleitung unter einem Winkel gegenüber der Längsrichtung (L) verläuft, der zwischen 5° und 70°, bevorzugt zwischen 5° und 50°, bevorzugt zwischen 5° und 40° liegt.

3. Vorrichtung (1) nach wenigstens einem der vorangegangenen Ansprüche,
**dadurch gekennzeichnet, dass**
der Abschnitt geradlinig verläuft.

4. Vorrichtung (1) nach wenigstens einem der vorangegangenen Ansprüche,
**dadurch gekennzeichnet, dass**
die Vorrichtung eine Vielzahl von Verbindungsleitungen (22) aufweist, welche das gasförmige Medium von der Anschlusseinrichtung zu der Blasdüse führen.

5. Vorrichtung nach Anspruch 4,
**dadurch gekennzeichnet, dass**
die Verbindungsleitungen (22) in einer Umfangsrichtung - bevorzugt sternförmig - um eine Längsachse (L) des Blaskolbens (14) angeordnet sind.

6. Vorrichtung (1) nach wenigstens einem der vorangegangenen Ansprüche,
**dadurch gekennzeichnet, dass**
die Vorrichtung (1) wenigstens ein Ventil (38) aufweist, um die Zufuhr des gasförmigen Mediums über die Verbindungsleitungen (22) zu steuern.

7. Vorrichtung (1) nach Anspruch 6,
**dadurch gekennzeichnet, dass**
das Ventil (38) über eine Zuleitung (39) mit den Verbindungsleitungen (22) in zumindest mittelbarer Strömungsverbindung bringbar ist, wobei eine Querschnittsfläche dieser Verbindungsleitungen (22) wenigstens so groß ist wie eine Querschnittsfläche der Zuleitung (39) und/oder wobei eine Querschnittsfläche der Verbindungsleitungen (22) größer oder gleich der Querschnittsfläche eines Entlüftungsventils ist.

8. Vorrichtung nach Anspruch 7,
**dadurch gekennzeichnet, dass**
eine Querschnittsfläche dieser Verbindungsleitungen (22) größer ist als eine Querschnittsfläche einer Zuleitung oder einer Entlastungsleitung.

9. Blaskolben (14) zur Beaufschlagung von Kunststoffvorformlingen (10) mit einem gasförmigen Medium mit einem Grundkörper (28), der in seinem Inneren einen durchgehenden und sich in einer Längsrichtung (L) des Blaskolbens (14) erstreckenden Hohlraum (36) aufweist, durch welchen ein stangenartiger Körper führbar ist, sowie eine Vielzahl von Verbindungsleitungen (22), welche zum Leiten eines gasförmigen Mediums geeignet sind,
wobei jede dieser Verbindungsleitungen (22) in einer Umfangsrichtung des Grundkörpers -insbesondere sternförmig - um den Hohlraum (36) angeordnet ist und schräg gegenüber der Längsrichtung (L) verläuft,
wobei
die Verbindungsleitungen (22) jeweils Einlassöffnungen (22a) aufweisen, und ein Ringraum (18) vorgesehen ist, der diese Einlassöffnungen (22a) gemeinsam mit dem gasförmigen Medium versorgt
**dadurch gekennzeichnet, dass**
zwischen dem stangenartigen Körper und dem Blaskolben (14) ein Führungsköper angeordnet ist.

## Claims

1. An apparatus (1) for the transforming of plastics material preforms (10) into plastics material containers with a blow moulding nozzle (2) arranged on a blow moulding piston (14) extending in a predetermined longitudinal direction (L), in order to act upon these plastics material preforms with a gaseous medium for the expansion thereof, with an attachment device in order to supply the gaseous medium to the blow moulding nozzle (2), and with at least one connecting line (22), which conveys the gaseous medium from the attachment device to the blow moulding nozzle,
wherein at least one portion of this connecting line (22) extends obliquely with respect to the longitudinal direction,
wherein the connecting lines (22) have in each case inlet openings (22a), and an annular space (18) is provided, which supplies these inlet openings (22a) commonly with the gaseous medium,
wherein the apparatus has a rod-like body (6) which is capable of being introduced into the plastics material preforms and which is passed through at least one portion of the blow moulding nozzle and/or the blow moulding piston (14),
**characterized in that**
a guide body is arranged between the rod-like body and the blow moulding piston (14).

2. An apparatus (1) according to claim 1,
**characterized in that**
the portion of this connecting line extends at an angle with respect to the longitudinal direction (L), which is between 5° and 70°, preferably between 5° and 50°, and preferably between 5° and 40°.

3. An apparatus (1) according to at least one of the preceding claims, **characterized in that**
the portion extends in a straight line.

4. An apparatus (1) according to at least one of the preceding claims, **characterized in that**
the apparatus has a plurality of connecting lines (22), which convey the gaseous medium from the attachment device to the blow moulding nozzle.

5. An apparatus according to claim 4,
**characterized in that**
the connecting lines (22) are arranged in a circumferential direction - preferably star-shaped - around a longitudinal axis (L) of the blow moulding piston (14).

6. An apparatus (1) according to at least one of the preceding claims, **characterized in that**
the apparatus (1) has at least one valve (38) in order to control the supply of the gaseous medium by way of the connecting lines (22).

7. An apparatus (1) according to claim 6,
**characterized in that**
the valve (38) is capable of being associated in flow connection with the connecting lines (22) at least indirectly via a supply line (39), wherein a cross-sectional area of these connecting lines (22) is at least as large as a cross-sectional area of the supply line (39) and/or wherein a cross-sectional area of the connecting lines (22) is larger than or equal to the cross-sectional area of a vent valve.

8. An apparatus according to claim 7,
**characterized in that**
a cross-sectional area of these connecting lines (22) is larger than a cross-sectional area of a feed line or a discharge line.

9. A blow moulding piston (14) for acting upon plastics material preforms (10) with a gaseous medium, with a main body (28), which has in the interior thereof a continuous cavity (36), which extends in a longitudinal direction (L) of the blow moulding piston (14) and through which a rod-like body is capable of being guided, as well as a plurality of connecting lines (22) which are suitable for conveying a gaseous medium,
wherein each of these connecting lines (22) is arranged around the cavity (36) in a circumferential direction of the main body - preferably star-shaped - and extends obliquely with respect to the longitudinal direction (L),
wherein the connecting lines (22) have in each case inlet openings (22a) and an annular space (18) is provided, which supplies these inlet openings (22a) commonly with the gaseous medium,
**characterized in that**
a guide body is arranged between the rod-like body and the blow moulding piston (14).

## Revendications

1. Dispositif (1) pour transformer des préformes en matière plastique (10) en contenants en matière plastique avec une buse de soufflage (2) disposée sur un piston de soufflage (14) s'étendant dans une direction longitudinale (L) prédéfinie afin de soumettre ces préformes en matière plastique à l'effet d'un milieu gazeux pour leur élargissement, avec un dispositif de raccordement, afin d'amener le milieu gazeux à la buse de soufflage (2) et avec au moins une conduite de liaison (22), laquelle guide le milieu gazeux du dispositif de raccordement à la buse de soufflage,
dans lequel au moins une partie de cette conduite de liaison (22) s'étend de manière oblique par rapport à la direction longitudinale, dans lequel les conduites de liaison (22) présentent respectivement des ouvertures d'entrée (22a), et un espace annulaire (18) est prévu, qui alimente ces ouvertures d'entrée (22a) conjointement avec le milieu gazeux,
dans lequel le dispositif présente un corps (6) du type tige pouvant être introduit dans les préformes en matière plastique, qui peut être guidé à travers au moins une partie de la buse de soufflage et/ou du piston de soufflage (14),
**caractérisé en ce que**
un corps de guidage est disposé entre le corps du type tige et le piston de soufflage (14).

2. Dispositif (1) selon la revendication 1,
**caractérisé en ce que**
la partie de cette conduite de liaison s'étend par rapport à la direction longitudinale (L) selon un angle qui est compris entre 5° et 70°, de préférence entre 5° et 50°, de préférence entre 5° et 40°.

3. Dispositif (1) selon au moins l'une des revendications précédentes, **caractérisé en ce que**
la partie s'étend de manière rectiligne.

4. Dispositif (1) selon au moins l'une des revendications précédentes, **caractérisé en ce que**
le dispositif présente une pluralité de conduites de liaison (22), lesquelles guident le milieu gazeux du dispositif de raccordement à la buse de soufflage.

5. Dispositif selon la revendication 4,
**caractérisé en ce que**
les conduites de liaison (22) sont disposées dans une direction périphérique - de préférence en forme d'étoile - autour d'un axe longitudinal (L) du piston de soufflage (14).

6. Dispositif (1) selon au moins l'une des revendications précédentes, **caractérisé en ce que**
le dispositif (1) présente au moins une soupape (38), afin de commander l'amenée du milieu gazeux par l'intermédiaire des conduites de liaison (22).

7. Dispositif (1) selon la revendication 6,
**caractérisé en ce que**
la soupape (38) peut être amenée en liaison fluidique au moins indirecte avec les conduites de liaison (22) par l'intermédiaire d'une conduite d'alimentation (39), dans lequel une surface de section transversale de ces conduites de liaison (22) est au moins aussi grande qu'une surface de section transversale de la conduite d'alimentation (39) et/ou dans lequel au moins une surface de section transversale des conduites de liaison (22) est supérieure ou égale à la surface de section transversale d'une soupape de ventilation.

8. Dispositif selon la revendication 7,
**caractérisé en ce que**
une surface de section transversale de ces conduites de liaison (22) est supérieure à une surface de section transversale d'une conduite d'alimentation ou d'une conduite de décharge.

9. Piston de soufflage (14) destiné à soumettre des préformes en matière plastique (10) à l'effet d'un milieu gazeux avec un corps de base (28), qui présente en son sein une cavité (36) continue et s'étendant dans une direction longitudinale (L) du piston de soufflage (14), à travers laquelle un corps du type tige peut être guidé, ainsi qu'une pluralité de conduites de liaison (22), lesquelles sont adaptées à acheminer un milieu gazeux,
dans lequel chacune de ces conduites de liaison (22) est disposée dans une direction périphérique du corps de base - en particulier en forme d'étoile - autour de la cavité (36) et s'étend de manière oblique par rapport à la direction longitudinale (L),
dans lequel les conduites de liaison (22) présentent respectivement des ouvertures d'entrée (22a), et un espace annulaire (18) est prévu, qui alimente ces ouvertures d'entrée (22a) conjointement avec le milieu gazeux
**caractérisé en ce que**
un corps de guidage est disposé entre le corps du type tige et le piston de soufflage (14).
